# FASCICULE DE BREVET EUROPEEN

(11) **EP 4 135 997 B1**
(45) Date de publication et mention de la délivrance du brevet: **23.07.2025**
(21) Numéro de dépôt: 21727502.3
(22) Date de dépôt: 12.04.2021
(51) Int. Cl.: B60R 16/02, B62D 25/08

(54) **TRAVERSE SUPÉRIEURE DE BLOC AVANT POUR VÉHICULE AUTOMOBILE**
OBERER QUERTRÄGER FÜR EIN KRAFTFAHRZEUG
FRONT END UPPER CROSSMEMBER FOR A MOTOR VEHICLE

(30) Priorité: 15.04.2020 FR 2003753
(43) Date de publication de la demande: 22.02.2023
(73) Titulaire: Stellantis Auto SAS, 78300 Poissy (FR)
(72) Inventeur: BUSSON, Nicolas, 70400 TREMOINS (FR); THIEBAULT, Ludovic, 70400 COUTHENANS (FR)
(74) Mandataire: BCIP
(86) Numéro de dépôt international: PCT/FR2021/050640
(87) Numéro de publication internationale: WO 2021/209708

(56) Documents cités:
- FR-A1- 2 858 798
- JP-A- H07 300 052

## Description

Le contexte technique de la présente invention est celui des éléments structurels équipant des véhicules automobiles, et plus particulièrement des aménagements conçus pour protéger des faisceaux électriques en face avant de véhicule automobile. Plus particulièrement, l'invention a trait à un ensemble comportant une traverse supérieure de bloc avant pour véhicule automobile et un déflecteur latéral.

Dans l'état de la technique, on connait des véhicules automobiles équipés de coussins gonflables de sécurité, autrement appelés airbags. Ces coussins gonflables de sécurité sont conçus pour se déployer consécutivement à un choc survenant en avant de véhicule automobile. Des capteurs accélérométriques associés aux coussins gonflables de sécurité permettent d'identifier un choc. Ces capteurs accélérométriques permettent de transmettre un signal de commande aux coussins gonflables de sécurité de sorte à initier leur déploiement pour absorber ce choc et protéger un passager du véhicule automobile. Des coussins gonflables de sécurité dit « avant », implantés en partie avant d'un habitacle du véhicule automobile, notamment au niveau d'une calle à pieds, permettent ainsi de protéger un occupant situé sur un siège à l'avant du véhicule automobile. Pour être protégés au moment d'un choc frontal, les capteurs accélérométriques pour coussins gonflables de sécurité avant sont logés derrière une traverse supérieure de bloc avant du véhicule automobile. Ces capteurs accélérométriques comprennent un faisceau électrique qui les relient aux coussins gonflables de sécurité.

La traverse supérieure de bloc avant du véhicule automobile comprend une entrée d'air qui alimente un système d'admission d'air situé en face arrière de ladite traverse supérieure. Le système d'admission d'air est destiné à alimenter en air extérieur un circuit de régulation thermique configuré pour réguler thermiquement un bloc moteur du véhicule automobile.

Le document FR 2 858 798 A1 divulgue un ensemble qui comporte une traverse supérieure de bloc avant pour un véhicule automobile et un déflecteur latéral tel que connu de l'état de la technique.

L'inconvénient des traverses supérieures de bloc avant connues est lié à l'encombrement du système d'admission d'air placé en arrière des traverses supérieures connues et qui impose au faisceau électrique du capteur accélérométrique d'être disposé en avant de celles-ci. Le faisceau électrique du capteur accélérométrique est logé entre une face avant de la traverse supérieure et une cloison anti-recyclage coiffant la traverse supérieure. Le faisceau électrique du capteur accélérométrique est alors exposé à un risque de détérioration consécutif au choc frontal. Plus particulièrement, le faisceau électrique du capteur accélérométrique est susceptible d'être pincé, écrasé voire sectionné par la cloison anti-recyclage déplacée contre la traverse supérieure à la suite du choc. Cette situation met en péril l'occupant en place avant, étant donné que tout endommagement du faisceau électrique du capteur accélérométrique peut compromettre la transmission du signal de commande aux coussins gonflables de sécurité pour leur déploiement.

La présente invention a pour objet de proposer une nouvelle traverse supérieure de bloc avant pour véhicule automobile afin de répondre au moins en grande partie aux problèmes précédents et de conduire en outre à d'autres avantages.

Un autre but de l'invention est de proposer une traverse supérieure de bloc avant pour véhicule automobile qui soit compatible avec le fonctionnement d'un capteur accélérométrique avant.

Un autre but de l'invention est de proposer une traverse supérieure de bloc avant pour véhicule automobile qui soit compatible avec le fonctionnement d'un coussin gonflable de sécurité.

Selon un premier aspect de l'invention, on atteint au moins l'un des objectifs précités avec un ensemble qui comporte une traverse supérieure de bloc avant pour véhicule automobile et un déflecteur latéral, la traverse supérieure comportant (i) un organe prismatique d'élongation longitudinale et configuré pour s'étendre entre deux bords latéraux du véhicule automobile, (ii) une grille ajourée s'étendant en saillie d'une face supérieure de l'organe prismatique, la grille ajourée étant délimitée latéralement par le déflecteur latéral qui s'étend jusqu'à une face avant de l'organe prismatique, caractérisé en ce qu'une extrémité avant du déflecteur latéral comporte une encoche configurée pour loger un faisceau électrique du véhicule automobile.

La traverse supérieure conforme au premier aspect de l'invention est destinée à équiper un bloc avant de véhicule automobile. La traverse supérieure conforme au premier aspect de l'invention est destinée à équiper le véhicule automobile en arrière d'un pare-chocs avant du véhicule automobile. La traverse supérieure conforme au premier aspect de l'invention s'étend latéralement en travers du véhicule automobile sur lequel elle est destinée à être montée. Le bloc avant de véhicule automobile est par exemple un bloc moteur. Notamment, la traverse supérieure conforme au premier aspect de l'invention est destinée à équiper le véhicule automobile en avant d'un bloc moteur du véhicule automobile.

L'extrémité avant du déflecteur latéral est située au niveau de la face avant de l'organe prismatique. L'extrémité avant du déflecteur latéral et la face avant de l'organe prismatique sont destinées à être orientées vers l'avant du véhicule automobile équipé de la traverse supérieure conforme au premier aspect de l'invention

La grille ajourée permet une circulation d'un flux d'air au travers de la grille ajourée. Dans le véhicule automobile équipé de la traverse supérieure, le flux d'air est un flux d'air extérieur au véhicule automobile. La grille ajourée est configurée pour collaborer avec un système d'admission d'air du véhicule automobile. La traverse supérieure est destinée à être située en avant du système d'admission d'air dans le véhicule automobile qu'elle équipe.

L'encoche traverse latéralement et de part en part le déflecteur latéral. L'encoche est ménagée dans l'extrémité avant du déflecteur latéral de sorte à loger le faisceau électrique du véhicule automobile, le faisceau électrique du véhicule automobile permettant avantageusement de déclencher un déploiement de coussin gonflable de sécurité de type airbag. En d'autres termes, le faisceau électrique passe au travers du déflecteur latéral au niveau de l'encoche.

Vis-à-vis d'une cloison anti-recyclage destinée à venir coiffer la traverse supérieure conforme au premier aspect de l'invention, l'encoche forme une entretoise dans l'extrémité avant du déflecteur latéral. L'encoche a un écartement fixe destiné au passage du faisceau électrique du véhicule automobile. L'encoche forme ainsi un renfort dans l'extrémité avant du déflecteur latéral. Elle consolide l'extrémité avant du déflecteur latéral pour protéger de l'écrasement le faisceau électrique du véhicule automobile qui y est logé.

La traverse supérieure conforme au premier aspect de l'invention est destinée à être coiffée par une cloison anti-recyclage. Le faisceau électrique est destiné à être situé dans une position intermédiaire entre la cloison anti-recyclage et la grille ajourée de la traverse supérieure conforme au premier aspect de l'invention. En particulier, l'encoche est destinée à être en regard de la cloison anti-recyclage.

Ainsi, dans la traverse supérieure conforme au premier aspect de l'invention, l'encoche du déflecteur latéral garanti le maintien de l'intégrité du faisceau électrique au niveau du déflecteur latéral. Une telle traverse supérieure prévient une compression du faisceau électrique du véhicule automobile entre le déflecteur latéral et la cloison anti-recyclage. En l'absence d'encoche, une telle compression fait suite à un rapprochement relatif entre la cloison anti-recyclage et le déflecteur latéral, la compression, correspondant à un pincement, un écrasement et/ou un sectionnement du faisceau électrique.

En l'absence d'encoche caractérisant l'invention, la compression du faisceau électrique est induite par le rapprochement relatif de la cloison anti-recyclage et du déflecteur latéral, situés de part et d'autre du faisceau électrique. Notamment, un déplacement de la cloison anti-recyclage, d'avant en arrière, est effectif lors d'un choc survenant en avant d'une traverse supérieure conforme au premier aspect de l'invention coiffée par ladite cloison anti-recyclage.

L'invention conforme à son premier aspect permet ainsi avantageusement de préserver le faisceau électrique du véhicule automobile logé dans l'encoche du déflecteur latéral lors d'un choc survenant en avant de l'invention.

La traverse supérieure conforme au premier aspect de l'invention comprend avantageusement au moins un des perfectionnements ci-dessous, les caractéristiques techniques formant ces perfectionnements pouvant être prises seules ou en combinaison :
- l'encoche formée sur l'extrémité avant du déflecteur latéral est située au-dessus de la face supérieure de l'organe prismatique. Une telle encoche est destinée à loger le faisceau électrique du véhicule automobile qui s'étend au niveau de la face supérieure de l'organe prismatique ;
- selon un premier mode de réalisation, l'encoche est délimitée verticalement par uniquement un bord inférieur situé du côté de la face supérieure de l'organe prismatique, l'encoche débouchant au niveau d'une arrête supérieure du déflecteur latéral. L'extrémité avant du déflecteur latéral comprend le bord inférieur et l'encoche. L'extrémité avant du déflecteur latéral est dépourvue de bord supérieur. Selon un deuxième mode de réalisation alternatif au premier mode de réalisation, correspondant au mode préféré de l'invention, l'encoche est délimitée verticalement par un bord supérieur situé du côté de l'arrête supérieure du déflecteur latéral et par le bord inférieur situé du côté de la face supérieure de l'organe prismatique. L'extrémité avant du déflecteur latéral comprend le bord inférieur et le bord supérieur de part et d'autre de l'encoche. L'encoche est ménagée dans l'extrémité avant du déflecteur latéral de sorte à ce qu'une ouverture de l'encoche, destinée au passage du faisceau électrique, soit délimitée par le bord supérieur de l'arrête supérieure du déflecteur latéral et le bord inférieur de l'arrête supérieure du déflecteur latéral. Avantageusement dans le deuxième mode de réalisation, l'encoche formée sur l'extrémité avant du déflecteur latéral a un profil en V ou en U. le profil en V ou en U est obtenu dans un plan d'extension du déflecteur latéral ;
- une profondeur de l'encoche, prise entre une arrête avant du déflecteur latéral et un bord arrière de l'encoche, est supérieure à un diamètre du faisceau électrique destiné à être installé dans l'encoche. L'arrête avant du déflecteur latéral délimite verticalement l'encoche. L'arrête avant du déflecteur latéral comprend le bord inférieur du déflecteur latéral. Le bord arrière de l'encoche forme un fond de l'encoche. Avec une telle profondeur d'encoche, lorsque le faisceau électrique est installé dans l'encoche, il est strictement logé entre l'arrête avant du déflecteur latéral et le bord arrière de l'encoche. Lorsque le faisceau électrique est installé dans l'encoche et que la cloison anti-recyclage coiffe la traverse supérieure selon l'invention, le faisceau électrique est préservé d'un écrasement de la cloison anti-recyclage déplacée contre l'arrête avant du déflecteur latéral ;
- l'organe prismatique comporte, au niveau de sa face supérieure et en avant de la grille ajourée, une pluralité de nervures configurée pour maintenir le faisceau électrique. La pluralité de nervures est avantageusement configurée pour maintenir le faisceau électrique dans le prolongement de l'encoche. A cet effet, les nervures sont avantageusement alignées avec l'encoche, relativement à une direction transversale de la traverse supérieure conforme au premier aspect de l'invention ;
- les nervures sont situées en contrebas par rapport à la grille ajourée. De telles nervures permettent d'éviter de placer le faisceau électrique dans le flux d'air. Ainsi, le flux d'air passant au travers de la grille ajourée n'est perturbé ni par les nervures ni par le faisceau électrique. De plus, placer le faisceau électrique hors du flux d'air permet d'éviter de le soumettre à des vibrations qui pourraient l'endommager et/ou le déloger des nervures et/ou de l'encoche ;
- la traverse supérieure est formée par un matériau métallique. Le matériau métallique comprend ainsi un métal ou un alliage métallique. A titre d'exemple non limitatif, le matériau métallique formant la traverse supérieure peut comprendre de l'aluminium et/ou de l'acier ;
- la traverse supérieure est formée par un matériau métallique de type acier ;
- la traverse supérieure obtenue par moulage. Ce procédé de formage industriel permet également d'obtenir à moindre coût un grand nombre d'unités identiques par répétition de l'utilisation d'un même moule. La traverse supérieure est avantageusement obtenue par fonderie. Ce procédé de formage de la traverse supérieure permet ainsi de limiter les étapes de reprises de pièces et permet de simplifier les processus de fabrication de ladite la traverse supérieure selon l'invention. Ce procédé de formage industriel permet également d'obtenir à moindre coût un grand nombre d'unités identiques par répétition de l'utilisation d'un même moule.

Selon un deuxième aspect de l'invention, il est proposé un arrangement pour véhicule automobile, l'arrangement comportant (i) la traverse supérieure conforme au premier aspect de l'invention ou selon l'un quelconque de ses perfectionnements, (ii) un faisceau électrique situé au niveau de la face supérieure de l'organe prismatique de la traverse supérieure et passant au travers de l'encoche formée sur le déflecteur latéral, (iii) une cloison anti-recyclage coiffant la traverse supérieure, de sorte que la cloison anti-recyclage est en appui simultanément contre une extrémité supérieure de la grille ajourée et la face avant de l'organe prismatique, le faisceau électrique étant situé dans une position intermédiaire entre la cloison anti-recyclage et la grille ajourée.

L'arrangement conforme au deuxième aspect de l'invention est destiné à être situé en avant du système d'admission d'air dans le véhicule automobile qu'elle équipe.

Dans l'arrangement conforme au deuxième aspect de l'invention, l'encoche du déflecteur latéral de la traverse supérieure forme une entretoise dans l'extrémité avant dudit déflecteur latéral permettant le passage du faisceau électrique du véhicule automobile.

Le faisceau électrique est situé dans une position intermédiaire entre la cloison anti-recyclage et la grille ajourée de la traverse supérieure. En particulier, l'encoche située en regard de la cloison anti-recyclage.

Le faisceau électrique permet par exemple de relier électriquement un capteur du véhicule automobile logé entre la traverse supérieure et la cloison anti-recyclage coiffant la traverse supérieure. Avantageusement, l'arrangement conforme au deuxième aspect de l'invention comporte un capteur accélérométrique situé au niveau d'une face arrière de l'organe prismatique et relié électriquement au faisceau électrique.

Dans l'arrangement conforme au deuxième aspect de l'invention, le faisceau électrique passe au travers de l'encoche, entre la cloison anti-recyclage et l'extrémité avant du déflecteur latéral de la traverse supérieure. Lors d'un choc survenant en avant de la traverse supérieure, la cloison anti-recyclage subit un déplacement d'avant en arrière et est peut-être déplacée en appui contre l'arrête avant du déflecteur latéral de la traverse supérieure. Le faisceau électrique du capteur accélérométrique qui passe au travers de l'encoche est ainsi protégé d'un pincement, d'un écrasement et/ou d'un sectionnement qui aurait été engendré par la cloison anti-recyclage déplacée contre la traverse supérieure suite audit choc. L'arrangement conforme au deuxième aspect de l'invention évite avantageusement une interruption de la transmission d'un message aux coussins gonflables de sécurité pour leur déploiement lorsque le faisceau électrique relie un capteur accélérométrique.

La cloison anti-recyclage est destinée à orienter au moins un fluide dans l'arrangement conforme au deuxième aspect de l'invention. Le fluide est par exemple un flux d'air et/ ou un flux d'eau.

Dans le véhicule automobile équipé de l'arrangement conforme au deuxième aspect de l'invention, la cloison anti-recyclage est destinée à orienter le flux d'air extérieur audit véhicule automobile vers le système d'admission d'air du véhicule automobile.

La cloison anti-recyclage est destinée à évacuer vers l'extérieur de l'arrangement une eau de ruissellement ayant intégré. Dans le véhicule automobile équipé de l'arrangement conforme au deuxième aspect de l'invention, la cloison anti-recyclage empêche l'eau de ruissellement de pénétrer dans le système d'admission d'air du véhicule automobile.

Selon un troisième aspect de l'invention, il est proposé un véhicule automobile comportant un bloc moteur et l'arrangement conforme au deuxième aspect de l'invention, le bloc moteur étant ventilé par l'intermédiaire d'un système d'admission d'air connecté à la grille ajourée de la traverse supérieure.

La traverse supérieure est située en arrière d'un pare-chocs avant du véhicule automobile.

L'arrangement est situé en avant du système d'admission d'air dans le véhicule automobile conforme au troisième aspect de l'invention.

Le système d'admission d'air est situé en avant du bloc moteur dans le véhicule automobile conforme au troisième aspect de l'invention. Le système d'admission d'air est destiné à alimenter en air extérieur un circuit de régulation thermique configuré pour réguler thermiquement le bloc moteur du véhicule automobile.

La cloison anti-recyclage oriente au moins un fluide dans le véhicule automobile conforme au troisième aspect de l'invention. Le fluide est par exemple un flux d'air et/ ou un flux d'eau.

Dans le véhicule automobile conforme au troisième aspect de l'invention, la cloison anti-recyclage est destinée à orienter le flux d'air extérieur audit véhicule automobile vers le système d'admission d'air du véhicule automobile pour ventiler le bloc moteur du véhicule automobile.

Dans le véhicule automobile conforme au troisième aspect de l'invention, la cloison anti-recyclage est destinée à évacuer vers l'extérieur une eau de ruissellement ayant intégré le véhicule automobile. La cloison anti-recyclage empêche l'eau de ruissellement de pénétrer dans le système d'admission d'air du véhicule automobile.

Des modes de réalisation variés de l'invention sont prévus, intégrant selon l'ensemble de leurs combinaisons possibles les différentes caractéristiques optionnelles exposées ici.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
[Fig.1] illustre une vue schématique d'un véhicule automobile au troisième aspect de l'invention ;
[Fig.2] illustre une vue schématique d'un arrangement pour véhicule automobile conforme au deuxième aspect de l'invention comprenant une traverse supérieure de bloc avant pour véhicule automobile conforme au premier aspect de l'invention ;
[Fig.3] illustre arrangement pour véhicule automobile conforme au deuxième aspect de l'invention de la FIGURE 2 selon un autre angle de vue ;
[Fig.4] illustre une vue schématique de la traverse supérieure de bloc avant pour véhicule automobile conforme au premier aspect de l'invention coiffée d'une cloison anti-recyclage ;
[Fig.5] illustre une vue en coupe transversale de la traverse supérieure de bloc avant pour véhicule automobile conforme au premier aspect de l'invention et de la cloison anti-recyclage montrées en FIGURE 4.

Bien entendu, les caractéristiques, les variantes et les différentes formes de réalisation de l'invention peuvent être associées les unes avec les autres, selon diverses combinaisons, dans la mesure où elles ne sont pas incompatibles ou exclusives les unes des autres. On pourra notamment imaginer des variantes de l'invention ne comprenant qu'une sélection de caractéristiques décrites par la suite de manière isolées des autres caractéristiques décrites, si cette sélection de caractéristiques est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

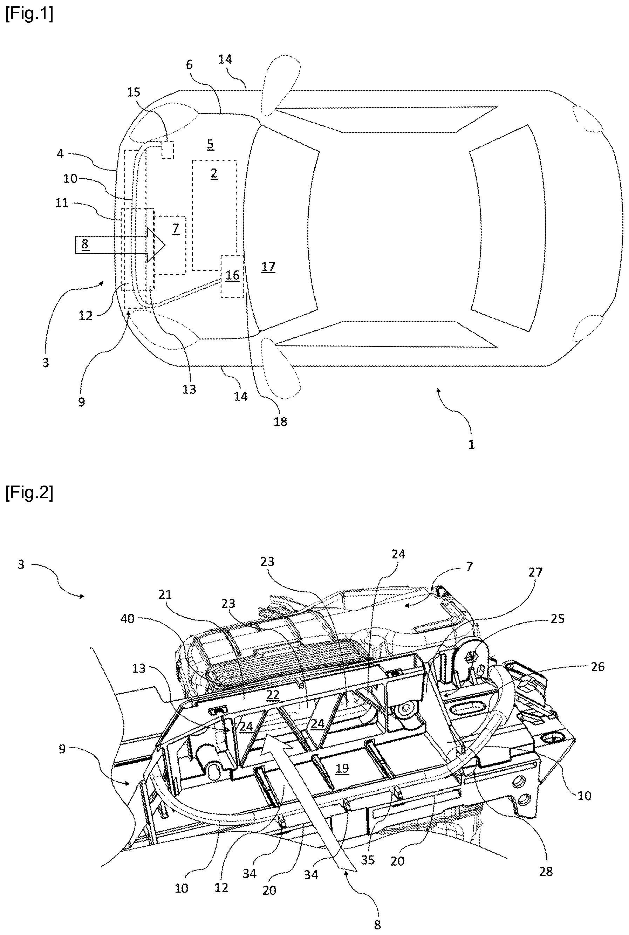

La FIGURE 1 montre un véhicule automobile 1 conforme au troisième aspect de l'invention vu du dessus. Les dénominations « avant », « arrière », « supérieure » et « inférieure » sont à considérer relativement au positionnement des éléments ainsi qualifiés lorsqu'ils équipent ledit véhicule automobile 1.

Le véhicule automobile 1 comporte un bloc moteur 2 et un arrangement 3 conforme au deuxième aspect de l'invention. Le bloc moteur 2 et l'arrangement 3 conforme au deuxième aspect de l'invention sont représentés par transparence en pointillés à l'avant du véhicule automobile 1 et en arrière d'un pare-chocs 4 avant du véhicule automobile 1.

Le bloc moteur 2 est logé dans un compartiment moteur 5 du véhicule automobile 1. Le bloc moteur 2 et le compartiment moteur 5 sont tous deux situés sous un capot 6 du véhicule automobile 1.

Le bloc moteur 2 est ventilé par un système 7 d'admission d'air. Le système 7 d'admission d'air permet de réguler thermiquement ledit bloc moteur 2 du véhicule automobile 1 grâce à un flux air extérieur au véhicule automobile 1. Le flux d'air extérieur au véhicule automobile 1, circulant en un flux laminaire vers le système 7 d'admission d'air, est représenté par une flèche 8 orientée d'avant en arrière par rapport au véhicule automobile 1. Un circuit relie le bloc moteur 2 au système 7 d'admission d'air. Le circuit reliant le bloc moteur 2 au système 7 d'admission d'air n'est pas représenté dans la FIGURE 1.

L'arrangement 3 conforme au deuxième aspect de l'invention comprend une traverse supérieure 9 de bloc avant pour véhicule automobile 1, un faisceau électrique 10, illustré partiellement, et une cloison anti-recyclage 11 coiffant la traverse supérieure 9. La traverse supérieure 9 est conforme au premier aspect de l'invention et est visible par transparence sous la cloison anti-recyclage 11 de l'arrangement 3.

La traverse supérieure 9 conforme au premier aspect de l'invention comporte un organe prismatique 12 et une grille ajourée 13. L'organe prismatique 12 de la traverse supérieure 9 est d'élongation longitudinale. Il s'étend entre deux bords latéraux 14 du véhicule automobile 1. La grille ajourée 13 de la traverse supérieure 9 est comprise entre l'organe prismatique 12 de la traverse supérieure 9 et le système 7 d'admission d'air. Le faisceau électrique 10 est en avant de la grille ajourée 13 de la traverse supérieure 9. Le faisceau électrique 10 est compris entre le pare-chocs 4 avant du véhicule automobile 1 et la grille ajourée 13 de la traverse supérieure 9.

Le faisceau électrique 10 relie électriquement un capteur de type capteur accélérométrique 15 à un coussin gonflable de sécurité 16. Le capteur de type capteur accélérométrique 15 est protégé en arrière de la traverse supérieure 9. Le coussin gonflable de sécurité 16 est, en l'espèce, logé sous une planche de bord 18 du véhicule automobile 1. Le coussin gonflable de sécurité 16 est conçu pour se déployer dans un habitacle 17 du véhicule automobile 1, consécutivement à un choc survenant en front de véhicule automobile 1 contre le pare-chocs 4 avant du véhicule automobile 1.

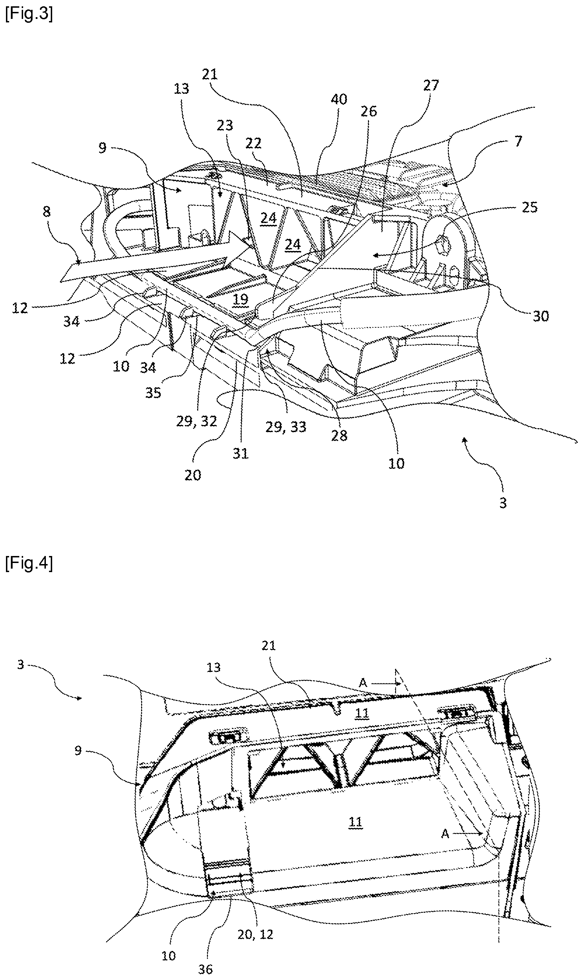

En référence aux FIGURES 2 et 3, l'arrangement 3 conforme au deuxième aspect de l'invention est montré plus en détails. Le flux d'air extérieur circulant vers le système 7 d'admission d'air, est représenté par la flèche 8. Pour faciliter la lecture de la FIGURE 2 et de la FIGURE 3, l'arrangement 3 conforme au deuxième aspect de l'invention est dépourvu de sa cloison anti-recyclage 11.

L'organe prismatique 12 de la traverse supérieure 9 conforme au premier aspect de l'invention comprend une face supérieure 19 destinée à être orientée du côté de la cloison anti-recyclage 11 de l'arrangement 3. L'organe prismatique 12 de la traverse supérieure 9 comprend une face avant 20 située en avant de la traverse supérieure 9.

La grille ajourée 13 de la traverse supérieure 9 s'étend en saillie de la face supérieure 19 de l'organe prismatique 12 de la traverse supérieure 9. La grille ajourée 13 de la traverse supérieure 9 comprend, opposée à la face supérieure 19 de l'organe prismatique 12 de la traverse supérieure 9, une extrémité supérieure 21. L'extrémité supérieure 21 de la grille ajourée 13 de la traverse supérieure 9 comprend une surface supérieure 22 d'appui de la cloison anti-recyclage 11 de l'arrangement 3. La grille ajourée 13 de la traverse supérieure 9 est en arrière de la face supérieure 19 de l'organe prismatique 12 de la traverse supérieure 9, relativement à la face avant 20 de l'organe prismatique 12 de la traverse supérieure 9.

La grille ajourée 13 de la traverse supérieure 9 comprend des ouvertures 23 pour le passage du flux d'air extérieur, les ouvertures 23 étant séparées par des portées 24. Les portées 24 forment des parois qui orientent le flux d'air extérieur au travers de la grille ajourée 13 de la traverse supérieure 9 et vers le système 7 d'admission d'air. En l'espèce, les portées 24 sont d'extension parallèle au flux d'air extérieur et sont orientées transversalement par rapport à la surface supérieure 22 d'appui de la cloison anti-recyclage 11 de l'arrangement 3 et par rapport à la face supérieure 19 de l'organe prismatique 12 de la traverse supérieure 9.

Le système 7 d'admission d'air est connecté à la grille ajourée 13 de la traverse supérieure 9 conforme au premier aspect de l'invention au niveau d'une bouche d'entrée d'air 40 dudit système 7 d'admission d'air. Lors d'une phase de roulage du véhicule automobile 1, le système 7 d'admission d'air capte l'air extérieur au véhicule automobile 1 s'engouffrant frontalement au véhicule automobile 1 et au travers de la grille ajourée 13 de la traverse supérieure 9 puis de la bouche d'entrée d'air 40 du système 7 d'admission d'air.

La traverse supérieure 9 conforme au premier aspect de l'invention comprend un déflecteur latéral 25. Le déflecteur latéral 25 forme une paroi qui oriente le flux d'air extérieur vers la grille ajourée 13 de la traverse supérieure 9. Le déflecteur latéral 25 s'étend depuis la grille ajourée 13 de la traverse supérieure 9 jusqu'à la face avant 20 de l'organe prismatique 12 de la traverse supérieure 9. Le déflecteur latéral 25 délimite latéralement la grille ajourée 13 de la traverse supérieure 9. Le déflecteur latéral 25 s'étend entre la face avant 20 de l'organe prismatique 12 de la traverse supérieure 9 et la surface supérieure 22 d'appui de la cloison anti-recyclage 11 de l'arrangement 3.

Le déflecteur latéral 25 comprend une extrémité avant 26 située du côté de la face avant 20 de l'organe prismatique 12 de la traverse supérieure 9 et une extrémité arrière 27 opposée à l'extrémité avant 26. L'extrémité avant 26 du déflecteur latéral 25 comporte une encoche 28. L'encoche 28 loge le faisceau électrique 10 du véhicule automobile 1. L'encoche 28 est située au-dessus de la face supérieure 19 de l'organe prismatique 12 de la traverse supérieure 9.

La FIGURE 3 montre que le déflecteur latéral 25 comprend une arrête avant 29 délimitant l'extrémité avant 26 du déflecteur latéral 25 et une arrête supérieure 30 prolongeant l'arrête avant 29 du déflecteur latéral 25 du côté de l'extrémité supérieure 21 de la grille ajourée 13 de la traverse supérieure 9. L'encoche 28 comprend une ouverture 31 délimitée verticalement par l'arrête avant 29. L'ouverture 31 de l'encoche 28 permet d'insérer le faisceau électrique 10 dans ladite encoche 28. En l'espèce, l'arrête avant 29 comprend un bord supérieur 32 entre l'ouverture 31 de l'encoche 28 et l'arrête supérieure 30 du déflecteur latéral 25. Le bord supérieur 32 de l'arrête avant 29 est situé du côté de l'arrête supérieure 30 du déflecteur latéral 25. En l'espèce, l'arrête avant 29 comprend un bord inférieur 33 entre l'ouverture 31 de l'encoche 28 et la face avant 20 de l'organe prismatique 12 de la traverse supérieure 9.

Les FIGURES 2 et 3 montrent que l'organe prismatique 12 de la traverse supérieure 9 comporte, au niveau de sa face supérieure 19 et en avant de la grille ajourée 13 de la traverse supérieure 9, une pluralité de nervures 34 configurée pour maintenir le faisceau électrique 10.

Les nervures 34, situées en contrebas par rapport à la grille ajourée 13 de la traverse supérieure 9, s'étendent en saillie de la face supérieure 19 de l'organe prismatique 12 de la traverse supérieure 9, et perpendiculairement à celle-ci. Les nervures 34 sont disposées en avant de la face supérieure 19 de l'organe prismatique 12 de la traverse supérieure 9, à l'opposé de la grille ajourée 13 de la traverse supérieure 9. Les nervures 34 sont chacune délimitées verticalement par la face avant 20 de l'organe prismatique 12 de la traverse supérieure 9.

Chacune des nervures 34 forme une paroi dans laquelle est ménagée une échancrure 35 traversée par le faisceau électrique 10. Chaque échancrure 35 maintient le faisceau électrique 10. Chaque nervure 34 est orientée parallèlement au flux d'air extérieur et parallèlement au déflecteur latéral 25. Chaque échancrure 35 est située dans le prolongement des autres échancrures 35, et dans le prolongement de l'encoche 28 formée dans le déflecteur latéral 25. Les nervures 34 sont réparties uniformément en amont de la grille ajourée 13 de la traverse supérieure 9.

Le faisceau électrique 10 est situé au niveau de la face supérieure 19 de l'organe prismatique 12 de la traverse supérieure 9. Le faisceau électrique 10 passe au travers de l'encoche 28 formée sur le déflecteur latéral 25 et au travers des échancrure 35 de la pluralité de nervures 34.

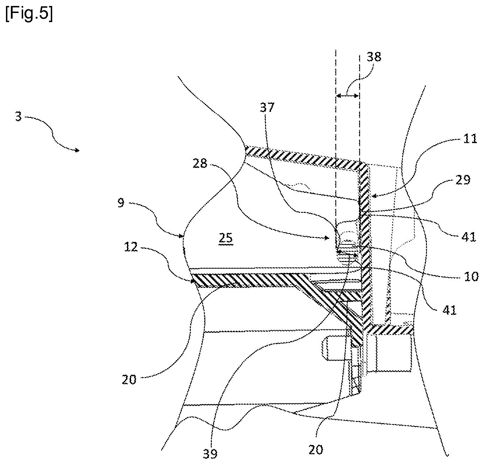

Les FIGURES 4 et 5 montrent l'arrangement 3 conforme au deuxième aspect de l'invention illustré en FIGURE 2, pourvu de la cloison anti-recyclage 11 de l'arrangement 3 qui coiffe la traverse supérieure 9 conforme au premier aspect de l'invention.

La cloison anti-recyclage 11 de l'arrangement 3 est en appui simultanément contre l'extrémité supérieure 21 de la grille ajourée 13 de la traverse supérieure 9 et la face avant 20 de l'organe prismatique 12 de la traverse supérieure 9. Le faisceau électrique 10, visible au travers d'une découpe 36 ménagée dans la cloison anti-recyclage 11 de l'arrangement 3, est ainsi dans une position intermédiaire entre la cloison anti-recyclage 11 de l'arrangement 3 et la grille ajourée 13 de la traverse supérieure 9.

La FIGURE 5 montre une coupe AA transversale de l'arrangement 3 conforme au deuxième aspect de l'invention, la coupe AA étant illustrée en FIGURE 4. La coupe AA est transversale à la face avant 20 de l'organe prismatique 12. La FIGURE 5 montre plus particulièrement l'encoche 28.

L'encoche 28 comprend un bord arrière 37. Le bord arrière 37 de l'encoche 28 forme un fond de l'encoche 28. L'encoche 28 formée sur l'extrémité avant 26 du déflecteur latéral 25 a un profil en U.

Une profondeur 38 de l'encoche 28, correspondant à une distance prise entre l'arrête avant 29 du déflecteur latéral 25 et le bord arrière 37 de l'encoche 28, est supérieure à un diamètre 39 du faisceau électrique 10 installé dans l'encoche 28.

La FIGURE 5 illustre qu'une surface interne 41 de la cloison anti-recyclage 11 de l'arrangement 3 est en appui contre l'arrête avant 29 du déflecteur latéral 25. La profondeur 38 d'encoche 28 permet au faisceau électrique 10 de conserver son diamètre 39 au niveau du déflecteur latéral 25, et d'être fonctionnel malgré le contact entre la surface interne 41 de la cloison anti-recyclage 11 de l'arrangement 3 et l'arrête avant 29 du déflecteur latéral 25.

En synthèse, l'invention concerne une traverse supérieure 9 de bloc avant pour véhicule automobile 1. La traverse supérieure 9 comporte un organe prismatique 12 d'élongation longitudinale et configuré pour s'étendre entre deux bords latéraux 14 du véhicule automobile 1. L'organe prismatique 12 comporte une face avant 20 et une face supérieure 19 depuis laquelle s'étend une grille ajourée 13 de la traverse supérieure 9. Un déflecteur latéral 25 de la traverse supérieure 9 délimite latéralement la grille ajourée 13 et s'étend jusqu'à la face avant 20 de l'organe prismatique 12. L'invention se caractérise par une encoche 28 ménagée dans une extrémité avant 26 du déflecteur latéral 25 et configurée pour loger un faisceau électrique 10 du véhicule automobile 1.

## Revendications

1. Ensemble comportant une traverse supérieure (9) de bloc avant pour véhicule automobile (1) et un déflecteur latéral (25), la traverse supérieure (9) comportant :
- un organe prismatique (12) d'élongation longitudinale et configuré pour s'étendre entre deux bords latéraux (14) du véhicule automobile (1) ;
- une grille ajourée (13) s'étendant en saillie d'une face supérieure (19) de l'organe prismatique (12), la grille ajourée (13) étant délimitée latéralement par le déflecteur latéral (25) qui s'étend jusqu'à une face avant (20) de l'organe prismatique (12) ;
**caractérisé en ce qu'**une extrémité avant (26) du déflecteur latéral (25) comporte une encoche (28) configurée pour loger un faisceau électrique (10) du véhicule automobile (1).

2. Ensemble selon la revendication précédente, dans laquelle l'encoche (28) formée sur l'extrémité avant (26) du déflecteur latéral (25) est située au-dessus de la face supérieure (19) de l'organe prismatique (12).

3. Ensemble selon l'une quelconque des revendications 1 ou 2, dans laquelle l'encoche (28) est délimitée verticalement par uniquement un bord inférieur (33) situé du côté de la face supérieure (19) de l'organe prismatique (12), l'encoche (28) débouchant au niveau d'une arrête supérieure (30) du déflecteur latéral (25).

4. Ensemble selon l'une quelconque des revendications 1 ou 2, dans laquelle l'encoche (28) est délimitée verticalement par un bord supérieur (32) situé du côté de l'arrête supérieure (30) du déflecteur latéral (25) et par un bord inférieur (33) situé du côté de la face supérieure (19) de l'organe prismatique (12).

5. Ensemble selon la revendication précédente, dans laquelle l'encoche (28) formée sur l'extrémité avant (26) du déflecteur latéral (25) a un profil en V ou en U.

6. Ensemble selon l'une quelconque des revendications précédentes, dans laquelle une profondeur (38) de l'encoche (28), prise entre une arrête avant (29) du déflecteur latéral (25) et un bord arrière (37) de l'encoche (28), est supérieure à un diamètre (39) du faisceau électrique (10) destiné à être installé dans l'encoche (28).

7. Ensemble selon l'une quelconque des revendications précédentes, dans laquelle l'organe prismatique (12) comporte, au niveau de sa face supérieure (19) et en avant de la grille ajourée (13), une pluralité de nervures (34) configurée pour maintenir le faisceau électrique (10).

8. Ensemble selon la revendication précédente, dans laquelle les nervures (34) sont situées en contrebas par rapport à la grille ajourée (13).

9. Arrangement (3) pour véhicule automobile (1), l'arrangement (3) comportant :
- la traverse supérieure (9) et un déflecteur latéral (25) d'un ensemble selon l'une quelconque des revendications précédentes ;
- un faisceau électrique (10) situé au niveau de la face supérieure (19) de l'organe prismatique (12) de la traverse supérieure (9) et passant au travers de l'encoche (28) formée sur le déflecteur latéral (25) ;
- une cloison anti-recyclage (11) coiffant la traverse supérieure (9), de sorte que la cloison anti-recyclage (11) est en appui simultanément contre une extrémité supérieure (21) de la grille ajourée (13) et la face avant (20) de l'organe prismatique (12), le faisceau électrique (10) étant situé dans une position intermédiaire entre la cloison anti-recyclage (11) et la grille ajourée (13).

10. Véhicule automobile (1) comportant un bloc moteur (2) et l'arrangement (3) selon la revendication précédente, le bloc moteur (2) étant ventilé par l'intermédiaire d'un système (7) d'admission d'air connecté à la grille ajourée (13) de la traverse supérieure (9).

## Patentansprüche

1. Baugruppe, die einen oberen Querträger (9) des vorderen Fahrzeugblocks (1) und eine seitliche Ablenkvorrichtung (25) umfasst, wobei der obere Querträger (9) folgendes umfasst:
- ein prismatisches Längserstreckungsglied (12), das so ausgebildet ist, dass es sich zwischen zwei Seitenrändern (14) des Kraftfahrzeugs (1) erstreckt;
- ein durchbrochenes Gitter (13), das sich von einer Oberseite (19) des prismatischen Elements (12) erstreckt, wobei das durchbrochene Gitter (13) seitlich durch die seitliche Ablenkvorrichtung (25) begrenzt ist, die sich bis zu einer Vorderseite (20) des prismatischen Elements (12) erstreckt;
Ein vorderes Ende (26) der seitlichen Ablenkvorrichtung (25) hat eine Kerbe (28), die so gestaltet ist, dass sie einen elektrischen Strahl (10) des Kraftfahrzeugs (1) aufnimmt.

2. Anordnung nach dem vorhergehenden Anspruch, bei der die Kerbe (28), die an dem vorderen Ende (26) der seitlichen Ablenkeinrichtung (25) ausgebildet ist, oberhalb der oberen Fläche (19) des prismatischen Elements (12) angeordnet ist.

3. Anordnung nach einem der Ansprüche 1 oder 2, bei der die Kerbe (28) vertikal durch nur eine untere Kante (33) begrenzt ist, die auf der Seite der oberen Fläche (19) des prismatischen Elements (12) angeordnet ist, wobei die Kerbe (28) an einer oberen Kante (30) der seitlichen Ablenkeinrichtung (25) mündet.

4. Anordnung nach einem der Ansprüche 1 oder 2, bei der die Kerbe (28) vertikal begrenzt ist durch eine obere Kante (32) auf der Seite der oberen Kante (30) der seitlichen Ablenkeinrichtung (25) und eine untere Kante (33) auf der Seite der oberen Fläche (19) des prismatischen Elements (12).

5. Anordnung nach dem vorhergehenden Anspruch, wobei die Kerbe (28), die an dem vorderen Ende (26) der seitlichen Ablenkeinrichtung (25) ausgebildet ist, ein V- oder U-Profil aufweist.

6. Anordnung nach einem der vorhergehenden Ansprüche, bei der eine Tiefe (38) der Kerbe (28), die zwischen einer vorderen Kante (29) der seitlichen Ablenkeinrichtung (25) und einer hinteren Kante (37) der Kerbe (28) liegt, größer ist als ein Durchmesser (39) des elektrischen Strahls (10), der in der Kerbe (28) installiert werden soll.

7. Anordnung nach einem der vorhergehenden Ansprüche, wobei das prismatische Element (12) an seiner Oberseite (19) und vor dem durchbrochenen Gitter (13) eine Vielzahl von Rippen (34) aufweist, die so konfiguriert sind, dass sie den elektrischen Strahl (10) halten.

8. Anordnung nach dem vorhergehenden Anspruch, wobei die Rippen (34) in Bezug auf das durchbrochene Gitter (13) abwärts angeordnet sind.

9. Anordnung (3) für ein Kraftfahrzeug (1), wobei die Anordnung (3) folgendes umfasst:
- der obere Querträger (9) und eine seitliche Ablenkvorrichtung (25) einer Anordnung nach einem der vorhergehenden Ansprüche;
- ein elektrischer Strahl (10) an der Oberseite (19) des prismatischen Teils (12) des oberen Querträgers (9), der durch die an der seitlichen Ablenkplatte (25) ausgebildete Kerbe (28) verläuft;
- eine die obere Traverse (9) abdeckende Recyclingschutzwand (11), sodass die Recyclingschutzwand (11) gleichzeitig an einem oberen Ende (21) des durchbrochenen Gitters (13) und an der Vorderseite (20) des prismatischen Organs (12) anliegt, wobei der elektrische Strahl (10) in einer Zwischenposition zwischen der Recyclingschutzwand (11) und dem durchbrochenen Gitter (13) angeordnet ist.

10. Kraftfahrzeug (1) mit einem Motorblock (2) und der Anordnung (3) nach dem vorhergehenden Anspruch, wobei der Motorblock (2) über ein Lufteinlasssystem (7) belüftet wird, das mit dem durchbrochenen Gitter (13) des oberen Querträgers (9) verbunden ist.

## Claims

1. Assembly comprising an upper cross-member (9) of a front block for a motor vehicle (1) and a lateral deflector (25), the upper cross-member (9) comprising:
- a prismatic member (12) of longitudinal elongation and configured to extend between two lateral edges (14) of the motor vehicle (1);
- a perforated grid (13) projecting from an upper face (19) of the prismatic member (12), the perforated grid (13) being delimited laterally by the lateral deflector (25) which extends to a front face (20) of the prismatic member (12);
**characterised in that** a front end (26) of the lateral deflector (25) comprises a notch (28) configured to house an electrical harness (10) of the motor vehicle (1).

2. Assembly according to the previous claim, in which the notch (28) formed on the front end (26) of the lateral deflector (25) is located above the upper face (19) of the prismatic member (12).

3. Assembly according to either of Claims 1 and 2, in which the notch (28) is delimited vertically by only a lower edge (33) located on the side of the upper face (19) of the prismatic member (12), the notch (28) opening on the level of an upper edge (30) of the lateral deflector (25).

4. Assembly according to either of Claims 1 and 2, in which the notch (28) is delimited vertically by an upper edge (32) located on the side of the upper edge (30) of the lateral deflector (25) and by a lower edge (33) located on the side of the upper face (19) of the prismatic member (12).

5. Assembly according to the previous claim, in which the notch (28) formed on the front end (26) of the lateral deflector (25) has a V- or U-shaped profile.

6. Assembly according to any one of the previous claims, in which a depth (38) of the notch (28), taken between a front edge (29) of the lateral deflector (25) and a rear edge (37) of the notch (28), is greater than a diameter (39) of the electrical harness (10) intended to be installed in the notch (28).

7. Assembly according to any one of the previous claims, in which the prismatic member (12) comprises, at the level of its upper face (19) and in front of the perforated grid (13), a plurality of ribs (34) configured to hold the electrical harness (10).

8. Assembly according to the previous claim, in which the ribs (34) are located below by report with the perforated grid (13).

9. Arrangement (3) for a motor vehicle (1), the arrangement (3) comprising:
- the upper crosspiece (9) and a lateral deflector (25) of an assembly according to any one of the previous claims;
- an electrical harness (10) located at the level of the upper face (19) of the prismatic member (12) of the upper cross-member (9) and passing through the notch (28) formed on the lateral deflector (25);
an anti-recycling partition (11) covering the upper crosspiece (9), so that the anti-recycling partition (11) bears simultaneously against an upper end (21) of the perforated grid (13) and the front face (20) of the prismatic member (12), the electrical bundle (10) being situated in an intermediate position between the anti-recycling partition (11) and the perforated grid (13).

10. Motor vehicle (1) comprising an engine block (2) and the arrangement (3) according to the previous claim, the engine block (2) being ventilated via an air intake system (7) connected to the perforated grid (13) of the upper crosspiece (9).
